# EUROPEAN PATENT APPLICATION

(11) **EP 0 549 057 A1**
(43) Date of publication of application: **30.06.1993**
(21) Application number: 92203957.3
(22) Date of filing: 16.12.1992
(51) Int. Cl.: F16H 55/06, B23P 15/14, B22F 5/08

(54) **Method for the manufacturing of gear-wheels, gear-wheels thus obtained and gear-wheel pump equipped therewith**

(30) Priority: 23.12.1991 BE 9101178
(71) Applicant: VOLVO CAR SINT-TRUIDEN, naamloze vennootschap, B-3800 Sint-Truiden (BE)
(72) Inventor: Braaksma, Barend, NL-5551 MG Dommelen (NL)
(74) Representative: Donné, Eddy

(57) **Abstract**

Method for the manufacturing of gear-wheels, characterized in that it consists in the forming of a gear-wheel (1) by means of sintering, the further processing of the tooth flanks (3) by means of a calibre and the blasting of the surface of the tooth flanks (3).

## Description

The present invention relates to a method for the manufacturing of gear-wheels, as well as to gear-wheels obtained through this method, and gear-wheel pumps using such gear-wheels.

It is known that with gear-wheel pumps classically use is made of worked gear-wheels, in other words gear-wheels which are manufactured through classical chipping techniques. These techniques, however, present the disadvantage that they are relatively expensive and that therefore the relatively simple gear-wheel pumps present a rather high cost price.

The invention therefore aims at a method for the manufacturing of gear-wheels that does not present the above-mentioned disadvantage.

To this end, it is started from sintered gear-wheels which are pulled through a calibre. Tests with these gear-wheels have shown, however, that, with the meshing of two such gear-wheels, the axial processing lines which arise from the processing with the calibre, lead to high frequent tones at high revolutions.

The invention also aims at a technique which excludes this disadvantage, in such a way that the obtained gear-wheels mesh silently independent of their revolutions.

To this end, the invention relates to a method for the manufacturing of gear-wheels, characterized in that it exists in forming the gear-wheel by sintering, the processing of the tooth flanks by means of a calibre and the blasting of the surface of the tooth flanks.

By blasting the tooth flanks, the advantage is obtained that the axial processing lines still existing after the processing with the calibre, are to a high extent removed and that the arising of a very penetrating, high frequency tone at high revolutions is avoided.

The gear-wheels which are manufactured according to the method according to the invention present a low cost price and are merely audible at high revolutions. When applied in a gear-wheel pump, the pump sound can be reduced to a very low level.

In order to better show the characteristics according to the invention, a preferred embodiment is described hereafter, without any limitative character whatsoever, reference being made to the accompanying drawings, in which:
figure 1 represents a sintered gear-wheel;
figure 2 represents a cross-section according to line II-II in figure 1;
figure 3 represents an enlarged view of the part indicated with F3 in figure 2;
figure 4 represents the part in figure 3 after the gear-wheel has been blasted.

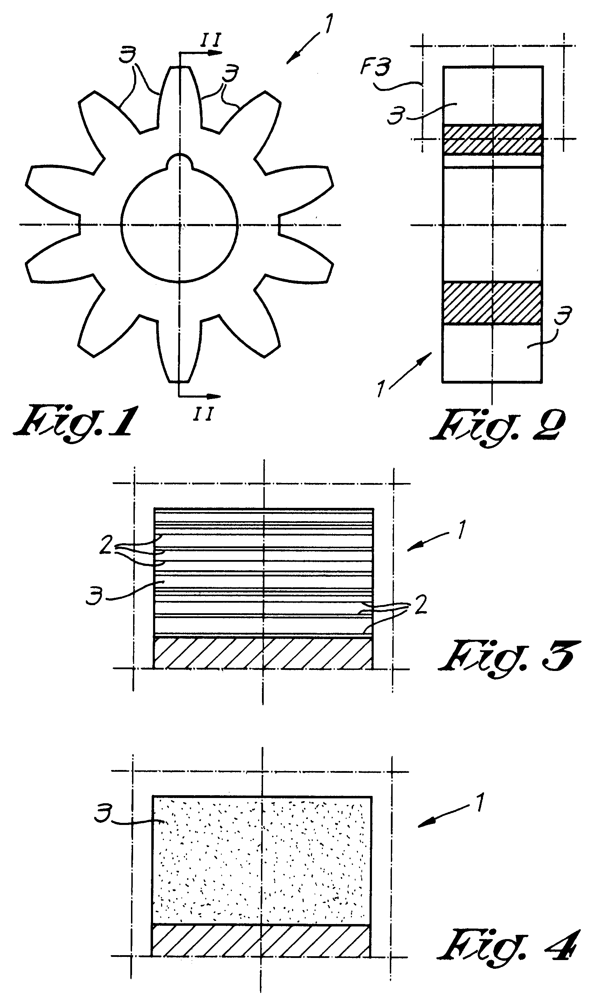

As represented in figures 1 and 2, in the first step of the invention a gear-wheel 1 is manufactured from a sintered material.

In order to obtain a high teething quality, the gear-wheel 1 is further processed in a calibre. The gear-wheel 1 is hereby slid in axial direction through the calibre.

With this technique, processing lines 2 occur in axial direction, more specifically as represented in figure 3. When two gear-wheels processed in this way cooperate, the processing lines 2 slide across each other, thus producing a high frequent sound at high speeds.

According to a particular step of the invention, this is avoided by blasting the gear-wheel 1, or anyway the tooth flanks 3, so that the processing lines 2 disappear and a uniform surface roughness is produced, as represented in figure 4.

Preferably, the gear-wheels 1 are only blasted lightly. Very good results are obtained if glass pearls are used.

It is shown from tests that gear-wheel pumps with blasted sintered gear-wheels are hardly audible during their use and that the pump sound is even less than with classical gear-wheel pumps.

It is clear that the invention relates to the above-mentioned method, as well as to gear-wheels which are manufactured according to this method.

The invention also relates to gear-wheel pumps which are provided with the above-mentioned gear-wheels.

The present invention is in no way limited to the embodiment described as an example and represented in the drawings, but this method, as well as gear-wheels and gear-wheel pumps can be realized in different variations without leaving the scope of the invention.

## Claims

1. Method for the manufacturing of gear-wheels, characterized in that it consists in the forming of a gear-wheel (1) by means of sintering, the further processing of the tooth flanks (3) by means of a calibre and the blasting of the surface of the tooth flanks (3).

2. Method according to claim 1, characterized in that the tooth flanks (3) are blasted with glass pearls.

3. Gear-wheel, characterized in that is exists of sintered material which is further processed by means of a calibre, whereby at least the tooth flanks (3) present a blasted surface.

4. Gear-wheel pump, characterized in that it is equipped with gear-wheels as described in claim 3.
